# FASCICULE DE BREVET EUROPEEN

(11) **EP 3 237 258 B1**
(45) Date de publication et mention de la délivrance du brevet: **15.11.2023**
(21) Numéro de dépôt: 15823687.7
(22) Date de dépôt: 18.12.2015
(51) Int. Cl.: B60W 20/00, B60W 20/13, B60W 10/26, B60W 50/00

(54) **PROCÉDÉ DE GESTION D'ÉNERGIE D'UNE BATTERIE DE TRACTION D'UN VÉHICULE HYBRIDE RECHARGEABLE**
VERFAHREN ZUR ENERGIEVERWALTUNG EINER WIEDERAUFLADBAREN TRAKTIONSBATTERIE EINES HYBRIDFAHRZEUGS
METHOD FOR ENERGY MANAGEMENT OF A RECHARGEABLE TRACTION BATTERY OF A HYBRID VEHICLE

(30) Priorité: 22.12.2014 FR 1463053
(43) Date de publication de la demande: 01.11.2017
(73) Titulaire: Renault s.a.s, 92100 Boulogne Billancourt (FR)
(72) Inventeur: DELOBEL, Bruno, 92130 Issy-les-Moulineaux (FR); SAINT-MARCOUX, Antoine, 91120 Palaiseau (FR)
(74) Mandataire: Renault Group
(86) Numéro de dépôt international: PCT/FR2015/053648
(87) Numéro de publication internationale: WO 2016/102856

(56) Documents cités:
- EP-A1- 2 404 801
- FR-A1- 2 995 859
- GB-A- 2 461 350
- JP-A- 2013 154 652
- US-A1- 2012 112 754
- US-A1- 2013 027 048
- US-A1- 2013 113 433
- US-A1- 2014 229 043

## Description

L'invention concerne un procédé de gestion de l'état de charge d'une batterie de traction d'un véhicule hybride rechargeable, comprenant un groupe moto-propulseur hybride du type comprenant un moteur thermique agencé pour la propulsion, et un moteur/générateur électrique agencé pour la propulsion.

On parle de véhicule hybride rechargeable lorsqu'un véhicule hybride, disposant de deux sources indépendantes d'énergies, peut se recharger sur le réseau électrique, ce qui permet de disposer d'une autonomie en mode électrique pur plus importante que sur un véhicule hybride classique. En effet, la batterie de traction qui alimente le moteur électrique est classiquement rechargée par le moteur thermique en marche ou encore par l'exploitation de l'énergie cinétique du véhicule et une option supplémentaire consiste alors à pouvoir recharger la batterie en la connectant au réseau électrique.

Dans le cadre des motorisations hybrides thermique-électrique, on connaît notamment la technologie PHEV (acronyme anglo-saxon pour « Plug-in-Hybrid Electric Vehicle »), dans laquelle les deux motorisations agissent de concert pour propulser le véhicule. L'usage du mode électrique dépendra de la configuration du véhicule. Il existe en particulier deux modes de fonctionnement principaux :
Dans un mode de fonctionnement dit « Charge Depleting » (CD), correspondant à un mode de fonction ZEV (« Zero Emission vehicle »), la batterie fournit l'intégralité de la puissance nécessaire à la propulsion. Dans un mode de fonctionnement qualifié de « Charge Sustaining » (CS), la batterie ne fournit qu'un appoint de puissance, l'essentiel de la puissance nécessaire à la propulsion du véhicule étant alors fournie par le moteur thermique. Ce dernier mode correspond à un fonctionnement similaire au mode HEV (« Hybrid Electric Vehicle »).

En fonction de la consigne de puissance destinée à être transmise aux roues motrices du véhicule et de la loi de gestion d'énergie mise en oeuvre par le système de gestion de l'énergie du véhicule, typiquement un calculateur haut niveau, par exemple un superviseur global du groupe moto-propulseur, le véhicule fonctionnera soit en mode CD, soit en mode CS.

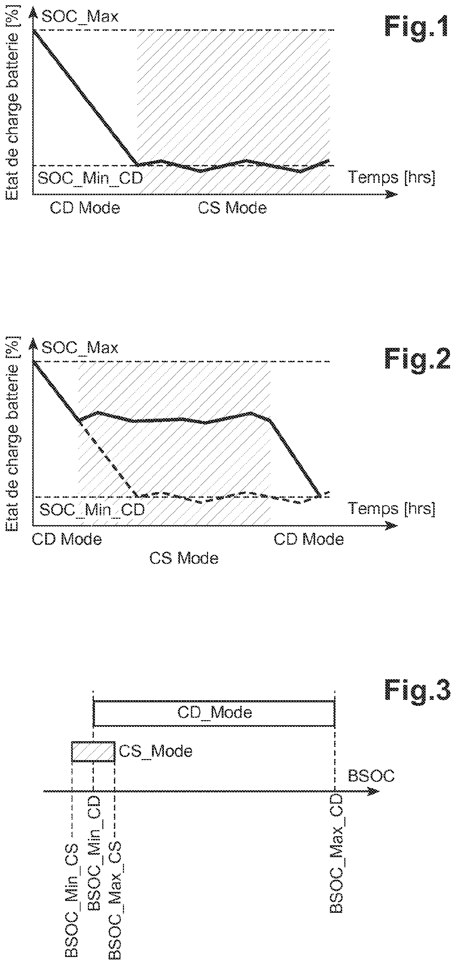

Classiquement, comme illustré sur la figure 1, dans le cas où la phase de roulage débute avec la batterie présentant un état de charge élevé, par exemple à pleine charge SOC_Max, le véhicule est utilisé en mode de fonctionnement CD et le système de gestion de l'énergie laissera dériver l'état de charge de la batterie dans ce mode de fonctionnement jusqu'à atteindre une valeur minimale d'état de charge prédéterminée SOC_Min_CD. Une fois cette condition atteinte, le conducteur dispose de la possibilité de pouvoir continuer à rouler en mode CS, dans lequel l'état de charge de la batterie est constamment maintenu autour de cette valeur minimale prédéterminée.

En variante, comme illustré sur la figure 2, le conducteur peut également imposer un fonctionnement en mode CS, même lorsque l'état de charge de la batterie reste à un niveau élevé, autour duquel l'état de charge de la batterie va être maintenu en mode CS, de façon à conserver le mode CD pour la fin de parcours, par exemple pour l'arrivée en ville. Toutefois, comme pour le fonctionnement illustré à la figure 1, lorsque l'état de charge de la batterie aura atteint la valeur minimale prédéterminée SOC_Min_CD en mode CD, le système de gestion de l'énergie du véhicule commandera automatiquement le basculement en mode CS.

Il apparaît que la plage d'utilisation de la batterie, c'est-à-dire la plage d'état de charge sur laquelle le conducteur peut utiliser la batterie, aussi bien en charge qu'en décharge, est un paramètre important pris en compte par la loi de gestion de l'énergie permettant la détermination du mode de fonctionnement du véhicule.

La plage d'utilisation de la batterie se caractérise notamment par l'état de charge maximal autorisé de la batterie, c'est-à-dire l'état de charge maximal au-dessus duquel la batterie n'est pas autorisée à monter. Un état de charge maximal autorisé trop élevé favorise une dégradation rapide de l'état de santé de la batterie, tandis qu'un état de charge maximal autorisé trop bas cause un détriment en termes d'énergie disponible pour le conducteur, en particulier en mode CD. Il y a donc un compromis à trouver par une gestion appropriée de la tension de fin de charge entre l'énergie qu'on veut assurer à court terme et la durabilité de la batterie.

La plage d'utilisation de la batterie est également caractérisée par l'état de charge minimal autorisé de la batterie, c'est-à-dire l'état de charge minimal au-dessous duquel la batterie n'est pas autorisée à descendre. Un état de charge minimal autorisé trop élevé se fait au détriment de l'énergie disponible pour le conducteur, en particulier en mode CD, tandis qu'un état de charge minimal autorisé trop bas est problématique dans la mesure où il existe un risque que la batterie ne puisse pas fournir le niveau de puissance minimal requis, en particulier dans le mode CS. Il y a donc là aussi un compromis à trouver par la gestion de l'état de charge minimal autorisé entre l'énergie qu'on souhaite assurer au conducteur (c'est-à-dire l'autonomie) et le maintien d'un niveau de performance acceptable, en particulier en termes de puissance minimale disponible en décharge de la batterie, aussi bien en mode CD qu'en mode CS.

Aussi, un des enjeux majeurs concerne la durabilité et le maintien des performances de la batterie dans le temps. A cet égard, la batterie subit deux types de vieillissement. D'une part, le vieillissement dit calendaire, qui est une dégradation des performances liée au temps passé à différents états de charge et de température et, d'autre part, le vieillissement par cyclage, qui est une dégradation liée aux niveaux de puissance transités par la batterie. Or, aujourd'hui, en particulier si l'on devait pouvoir faire fonctionner la batterie en mode CD pendant toute la durée de vie de la batterie, il est très difficile d'assurer la durabilité de la batterie compte tenu de ces contraintes de vieillissement. Dans des cas extrêmes, la batterie peut entrer en « mort subite », qui se caractérise par une augmentation drastique de la résistance interne des cellules de la batterie et une réduction de sa capacité utile.

On connaît du document de brevet FR3002045, un procédé de gestion de la plage d'utilisation d'une batterie en fonction du vieillissement de cette dernière, qui consiste, en particulier, à estimer la tension de fin de charge en fonction de l'état de santé en énergie de la batterie, de sorte à augmenter l'état de charge maximal autorisé et partant, la plage d'état de charge utile, en fonction de l'état de vieillissement de la batterie. Une telle méthode permet d'assurer un niveau d'énergie minimal requis tout en limitant la dégradation de la batterie. Toutefois, la durabilité de la batterie reste encore limitée.

Le document US2012/112754A1 divulgue un procédé ayant des inconvénients similaires. Le document JP 2013 154652 A divulgue un procédé de gestion de l'état de charge d'une batterie de traction d'un véhicule hybride rechargeable considérant la diminution de l'amplitude de la plage d'état de charge liée à un premier mode de fonctionnement en fonction d'un état de vieillissement de la batterie.

Dans ce contexte, il existe donc un besoin pour un procédé de gestion de l'énergie d'une batterie exempt des limitations précédemment évoquées et, en particulier, qui permette de préserver la durabilité de la batterie.

A cette fin, l'invention concerne un procédé de gestion de l'état de charge d'une batterie de traction d'un véhicule hybride rechargeable, tel que défini par la revendication 1, comprenant un groupe moto-propulseur hybride du type comprenant un moteur thermique et un moteur/générateur électrique destinés à assurer simultanément ou indépendamment la propulsion, ladite batterie étant apte à fonctionner selon un premier mode de fonctionnement sur une plage d'état de charge d'amplitude bornée entre des valeurs maximale et minimale d'état de charge prédéterminées, dans lequel la batterie fournit l'intégralité de la puissance nécessaire à la propulsion et un second mode de fonctionnement dans lequel l'état de charge de la batterie est constamment maintenu sensiblement autour d'une valeur d'état de charge d'équilibre, ledit procédé comprenant des étapes de :
- estimation d'un état de vieillissement de la batterie,
- comparaison de l'état de vieillissement estimé de la batterie par rapport à un seuil d'état de vieillissement donné, et
- diminution de l'amplitude de la plage d'état de charge liée au premier mode de fonctionnement lorsque l'état de vieillissement de la batterie devient supérieur au seuil d'état de vieillissement donné.

Selon l'invention, l'amplitude de la plage d'état de charge liée au premier mode de fonctionnement est diminuée progressivement en fonction de l'état de vieillissement jusqu'à une amplitude nulle, de sorte que la batterie fonctionne exclusivement selon le second mode de fonctionnement lorsque l'amplitude nulle de la plage d'état de charge liée au premier mode de fonctionnement est atteinte.

Toujours selon l'invention, l'étape de diminution de l'amplitude de la plage d'état de charge liée au premier mode de fonctionnement consiste à faire converger l'une vers l'autre ladite valeur maximale et ladite valeur minimale d'état de charge prédéterminées.

De préférence, l'étape d'estimation de l'état de vieillissement de la batterie comprend la détermination de l'état de santé en énergie de la batterie.

En variante ou en combinaison, l'étape d'estimation de l'état de vieillissement de la batterie comprend la détermination du temps écoulé depuis la mise en service de la batterie.

En variante ou en combinaison, l'étape d'estimation de l'état de vieillissement de la batterie comprend la détermination d'un nombre de charges complètes réalisées de la batterie.

En variante ou en combinaison, l'étape d'estimation de l'état de vieillissement de la batterie comprend la détermination de la somme des quantités d'énergie déchargées depuis la batterie fonctionnant selon le premier mode de fonctionnement et/ou le second mode de fonctionnement depuis la mise en service de la batterie.

Avantageusement, les valeurs maximales et minimales d'état de charge prédéterminées pour le premier mode de fonctionnement de la batterie sont déterminées en fonction d'une cartographie reliant l'état de vieillissement de la batterie estimé à chacune de ces valeurs.

L'invention concerne encore un dispositif de gestion de l'état de charge d'une batterie de traction d'un groupe moto-propulseur hybride d'un véhicule hybride rechargeable tel que défini par la revendication 7.

L'invention concerne encore un véhicule automobile hybride rechargeable tel que défini par la revendication 8.

D'autres particularités et avantages de l'invention ressortiront à la lecture de la description faite ci-après d'un mode de réalisation particulier de l'invention, donné à titre indicatif mais non limitatif, en référence aux figures annexée dans lesquelles :
- les Figures 1 et 2, qui ont déjà été décrites, illustrent l'évolution de l'état de charge de la batterie en fonction du temps suivant deux modes de réalisation connus de mise en oeuvre des deux modes de fonctionnement, respectivement le mode CD et le mode CS,
- la Figure 3 illustre les plages d'utilisation autorisées de la batterie liées d'une part, au mode de fonctionnement CD et, d'autre part, au mode de fonctionnement CS.
- la Figure 4 illustre l'évolution de ces plages d'utilisation de la batterie au cours du temps, sans mise en oeuvre de la présente invention ;
- la Figure 5 illustre l'évolution de ces plages d'utilisation de la batterie au cours du temps, lorsque l'invention est mise en oeuvre.

Les variables qui seront utilisés dans la suite de la description sont listées ci-après :
BSOC : L'état de charge de la batterie (SOC, acronyme anglais pour State Of Charge) - unité [%],
SOHE: L'état de santé en énergie de la batterie - unité [%]. L'état de santé en énergie est révélateur de la capacité de la batterie à fournir un niveau d'énergie minimal requis et est défini dans la suite comme étant le rapport entre d'une part, l'énergie qu'on peut décharger avec la batterie pleinement chargée, à une température de référence (par exemple 25°C), à un niveau de courant constant de référence (par exemple 1C), jusqu'à l'atteinte de la tension de coupure (par exemple 2.5V) à un instant de vie donné de la batterie et, d'autre part, l'énergie qu'on peut décharger avec la batterie pleinement chargée dans les mêmes conditions lorsqu'elle est neuve. Ainsi, en début de vie, ce rapport vaut 100%, et il diminue petit à petit. En effet, pendant la durée de vie d'une batterie, sa santé (ses performances) tend à se détériorer progressivement à cause des changements physiques et chimiques irréversibles qui ont lieu lors de l'usage et du vieillissement, jusqu'à ce que finalement la batterie ne soit plus utilisable. Le SOHE reflète donc un état de santé de la batterie et sa capacité à fournir les performances spécifiées en termes d'énergie disponible par rapport à une batterie neuve.

Comme il a été expliqué précédemment, la dégradation ou le vieillissement de la batterie est liée d'une part à la dégradation calendaire (la batterie passe du temps à une certaine température et un certain état de charge donné) et, d'autre, part à la dégradation par cyclage (liés aux kWh déchargés ou chargés dans la batterie). Toutefois, en mode CS, la contribution de la dégradation liée au cyclage est quasiment inexistante. En effet, la polarisation d'une cellule électrochimique de la batterie liée au cyclage est plus faible en mode CS qu'en mode CD, du fait que la valeur moyenne du courant est globalement nulle en mode CS, dans la mesure où la batterie cycle autour d'un état de charge donné ; tandis qu'en mode CD, la valeur moyenne du courant est négative, puisqu'on moyenne, on décharge la batterie. Aussi, une première manière de préserver la durabilité consiste donc à interdire le mode CD, qui contribue le plus à la dégradation de la batterie dans certaines conditions. Une telle stratégie de gestion de l'énergie de la batterie revient donc à faire cycler la batterie autour d'un niveau d'état de charge fixé, puisque le mode CD étant alors interdit, la batterie fonctionne en mode CS, dans lequel l'état de charge de la batterie est constamment maintenu, en moyenne, autour de ce niveau d'état de charge d'équilibre.

En outre, l'influence de la dégradation calendaire sur une cellule électrochimique est moindre pour une cellule à bas état de charge (pour un niveau de température donné) qu'à haut état de charge. Aussi, une stratégie optimale pour préserver la durabilité consisterait à faire cycler la batterie en mode CS autour d'un niveau d'état de charge d'équilibre, qui soit le plus bas possible. Cet état de charge d'équilibre ne peut toutefois pas être trop faible afin de pouvoir préserver un niveau de puissance disponible en décharge suffisant, y compris à basse température.

Compte tenu de ce qui précède, le coeur de la stratégie de gestion d'énergie selon l'invention, consiste à brider, jusqu'à l'interdire, le fonctionnement de la batterie en mode CD à partir du moment où le vieillissement de la batterie est supérieur à un seuil d'état de vieillissement donné. Lorsque le mode CD est interdit, le groupe moto-propulseur hybride du véhicule est alors commandé pour fonctionner exclusivement en mode CS, ce qui revient à faire cycler la batterie autour d'un niveau de BSOC fixé et donc à réduire la plage d'utilisation en BSOC de la batterie, et à imposer un fonctionnement du véhicule en mode CS (ou HEV), de sorte que la plus grande partie de la puissance fournie à la roue vient du moteur thermique.

Aussi, la mise en oeuvre de cette stratégie par le superviseur du groupe moto-propulseur hybride implique de réaliser une estimation de l'état de vieillissement de la batterie et une comparaison de cet état de vieillissement estimé par rapport au seuil fixé par la stratégie. En particulier, cet état de vieillissement de la batterie peut être déterminé par une estimation de l'état de santé en énergie de la batterie (SOHE).

Cette estimation peut par exemple être effectuée par le calculateur BMS (acronyme anglo-saxon pour « Battery Management System ») dédié à la batterie. Le calculateur BMS est ainsi prévu pour réaliser une estimation de l'état de santé en énergie de la batterie SOHE. Il existe plusieurs méthodes pour estimer l'état de santé en énergie de la batterie. A titre d'exemple, on pourra utiliser pour cette estimation l'une des méthodes exposées dans le brevet "METHOD AND APPARATUS OF ESTIMATING STATE OF HEALTH OF BATTERY" (US2007/0001679 A1) ou dans l'article « R. Spotnitz, "Simulation of capacity fade in lithium ion batteries", Journal of Power Sources 113 (2003) 72-80.»

La mise en oeuvre de la stratégie de gestion d'énergie consiste également à définir de la manière dont on passe d'une situation où le superviseur du groupe moto-propulseur hybride autorise le fonctionnement selon le mode CD, en complément du mode CS, à une situation où le fonctionnement selon le mode CD n'est plus autorisé.

Ainsi, selon un premier mode de réalisation, cette transition peut se faire à partir du moment où l'état de vieillissement de la batterie, préférentiellement estimé par le BMS au moyen du calcul du SOHE, devient supérieur à un seuil donné. Par exemple, si ce seuil est de 60%, tant que l'état de santé en énergie de la batterie est supérieur à 60%, le superviseur autorise le fonctionnement en mode CD. Le conducteur pourra donc faire une partie de son parcours en mode CD, et la fin de son parcours en mode CS. Par contre, dès que l'état de santé en énergie tombera en dessous de 60%, autrement dit que l'état de vieillissement de la batterie devient supérieur au seuil d'état de vieillissement fixé, le superviseur est conçu pour interdire le fonctionnement en mode CD, de sorte que le conducteur sera obligé d'effectuer l'intégralité de son parcours en mode CS. Toutefois, selon ce mode de réalisation, la transition entre les deux situations (c'est-à-dire avec et sans autorisation du fonctionnement en mode CD) se fait de manière brutale, ce qui n'est pas particulièrement souhaitable.

Aussi, selon un autre mode de réalisation, cette transition peut se faire sur la base d'une évolution progressive de la plage de BSOC autorisée en fonction du SOHE. Pour ce faire, le BMS définit à chaque instant une plage d'utilisation autorisée pour la batterie, celle-ci pouvant éventuellement dépendre de la température et du vieillissement. Dans ce contexte et comme illustré en figure 3, il existe de manière générale :
- une plage d'état de charge CD_Mode liée au fonctionnement en mode CD, dont l'amplitude est bornée entre une valeur minimale d'état de charge BSOC_Min_CD et une valeur maximale d'état de charge BSOC_Max_CD ; et
- une plage d'état de charge CS_Mode liée au fonctionnement en mode CS, dont l'amplitude est bornée entre une valeur minimale d'état de charge BSOC_Min_CS et une valeur maximale d'état de charge BSOC_Max_CS.

Ces deux plages peuvent être superposées localement, comme illustré sur la figure 3.

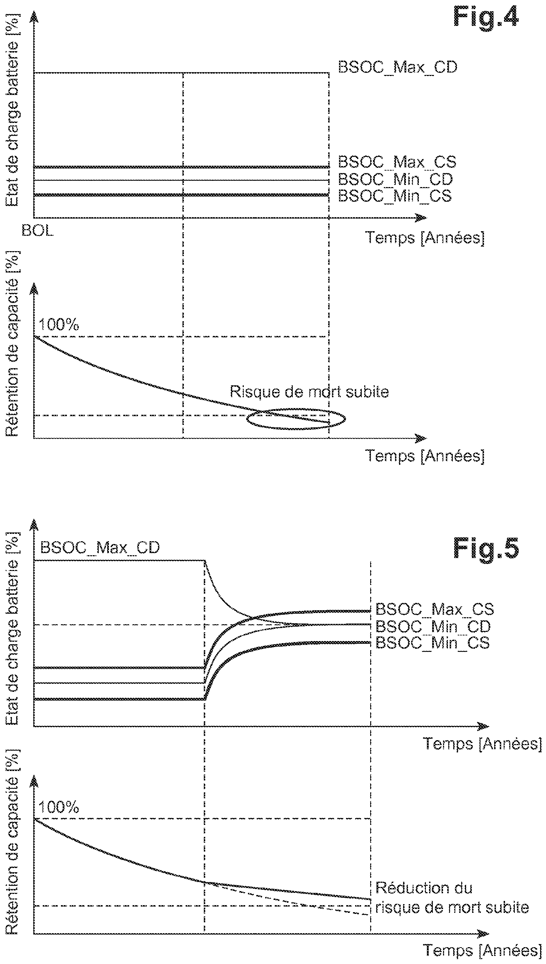

Comme illustré à la figure 4, si la plage d'état de charge lié au fonctionnement en mode CD ne varie pas au cours du temps, il existe un risque que la batterie se dégrade au-delà d'un seuil pouvant amener les cellules en mort subite.

Aussi, conformément à l'invention, on vient diminuer l'amplitude de la plage d'état de charge liée au mode de fonctionnement CD, à partir d'un état de vieillissement donné de la batterie. Plus précisément, en dessous d'un certain niveau de SOHE, autrement dit au-delà d'un certain seuil d'état de vieillissement donné de la batterie, l'amplitude de la plage d'état de charge liée au mode CD décroît progressivement jusqu'à atteindre une valeur nulle. Toujours conformément à l'invention et comme illustré à la figure 5, les valeurs minimale et maximale d'état de charge bornant la plage d'état de charge autorisée en mode CD, respectivement BSOC_Min_CD et BSOC_Max_CD, convergent l'une vers l'autre jusqu'à devenir égales. Lorsque la plage d'état de charge autorisée en mode CD a disparu, alors le superviseur est conçu pour faire fonctionner la batterie exclusivement en mode CS, dans lequel l'état de charge de la batterie est maintenu sensiblement autour d'une valeur d'état de charge d'équilibre correspondant typiquement à la valeur d'état de charge de convergence des valeurs minimale et maximale d'état de charge bornant la plage d'état de charge autorisée en mode CD. L'état de charge de la batterie en mode CS est alors maintenu sensiblement autour de cette valeur de convergence et peut légèrement augmenter ou diminuer entre les bornes minimale BOSC_Min_CS et maximale BSOC_Max_CS respectives de la plage d'état de charge autorisée CS_Mode en mode CS. Comme il apparaît sur la figure 5, à compter de la mise en place de la stratégie de gestion d'énergie selon l'invention, soit à compter du déclenchement de la décroissance de l'amplitude de la plage d'état de charge autorisée en mode CD à partir d'un seuil d'état de vieillissement donné, le taux de rétention de capacité de la batterie diminue moins vite. Le procédé de l'invention permet donc d'améliorer la rétention de capacité de la batterie à partir d'un seuil d'état de vieillissement donné.

Concernant l'estimation de l'état de vieillissement de la batterie à partir de la détermination du SOHE, ce dernier peut être calculé soit par un estimateur en boucle fermée, soit par un estimateur en boucle ouverte basé sur un modèle empirique. L'utilisation d'un estimateur en boucle fermé n'est toutefois pas souhaitable car celui-ci est par construction sujet à des fluctuations, de sorte que le superviseur risquerait d'autoriser ou d'interdire de manière aléatoire le fonctionnement en mode CD.

En variante, l'estimation de l'état de vieillissement de la batterie peut reposer sur la détermination d'autres paramètres que le seul SOHE, notamment :
- le temps écoulé depuis la mise en service de la batterie ;
- la somme des kWh déchargés (ou chargés) en mode CD et/ou en mode CS ;
- le nombre de charges complètes réalisées.

De tels paramètres pourront avantageusement être utilisés pour caractériser simplement l'état de vieillissement de la batterie. Ainsi, la détermination des valeurs de BSOC_min_CD, BSOC_max_CD, BSOC_min_CS et de BSOC_max_CS pourra être déterminée par une cartographie reliant l'état de vieillissement de la batterie déterminé par l'un de ces paramètres (ou bien une combinaison de ces paramètres) à chacune de ces valeurs.

La stratégie de gestion d'énergie objet de la présente invention pourra avantageusement être combinée avec d'autres logiques de gestion de plage d'état de charge de la batterie. Ainsi, elle pourra être combinée avec une stratégie de gestion de la plage d'état de charge visant à augmenter progressivement la valeur d'état de charge minimal d'une cellule en fonction du vieillissement de manière à préserver la puissance disponible en décharge. Cette stratégie de gestion de la plage d'état de charge se base sur le principe physique selon lequel à haut état de charge, la puissance disponible est plus élevée. Elle pourra aussi être combinée avec une stratégie de gestion de plage d'état de charge consistant à brider, en début de vie de la batterie, la valeur d'état de charge maximal autorisé, et à l'augmenter progressivement, de sorte à maintenir pendant une certaine durée l'énergie disponible pour le conducteur. Ces différentes stratégies sont avantageusement compatibles entre elles, dans la mesure où la stratégie de gestion d'énergie objet de la présente invention concerne principalement la gestion de la fin de vie de la batterie, par contraste avec les deux autres stratégies sus-citées, qui concernent principalement le début de vie de la batterie.

## Revendications

1. Procédé de gestion de l'état de charge d'une batterie de traction d'un véhicule hybride rechargeable, comprenant un groupe moto-propulseur hybride du type comprenant un moteur thermique et un moteur/générateur électrique destinés à assurer simultanément ou indépendamment la propulsion, ladite batterie étant apte à fonctionner selon un premier mode de fonctionnement sur une plage d'état de charge (CD_Mode) d'amplitude bornée entre des valeurs maximale (BSOC_Max_CD) et minimale (BSOC_Min_CD) d'état de charge prédéterminées, dans lequel la batterie fournit l'intégralité de la puissance nécessaire à la propulsion et un second mode de fonctionnement dans lequel l'état de charge de la batterie est constamment maintenu sensiblement autour d'une valeur d'état de charge d'équilibre, ledit procédé comprenant des étapes de :
- estimation d'un état de vieillissement de la batterie,
- comparaison de l'état de vieillissement estimé de la batterie par rapport à un seuil d'état de vieillissement donné, et
- diminution de l'amplitude de la plage d'état de charge (CD_Mode) liée au premier mode de fonctionnement lorsque l'état de vieillissement de la batterie devient supérieur au seuil d'état de vieillissement donné
le procédé étant **caractérisé en ce que** l'amplitude de la plage d'état de charge (CD_Mode) liée au premier mode de fonctionnement est diminuée progressivement en fonction de l'état de vieillissement jusqu'à une amplitude nulle, ceci en faisant converger l'une vers l'autre ladite valeur maximale (BSOC_Max_CD) et ladite valeur minimale (BSOC_Min_CD) d'état de charge prédéterminées, de sorte que la batterie fonctionne exclusivement selon le second mode de fonctionnement lorsque l'amplitude nulle de la plage d'état de charge liée au premier mode de fonctionnement est atteinte.

2. Procédé selon la revendication 1, **caractérisé en ce que** l'étape d'estimation de l'état de vieillissement de la batterie comprend la détermination de l'état de santé en énergie de la batterie.

3. Procédé selon l'une quelconque des revendications précédentes, **caractérisé en ce que** l'étape d'estimation de l'état de vieillissement de la batterie comprend la détermination du temps écoulé depuis la mise en service de la batterie.

4. Procédé selon l'une quelconque des revendications précédentes, **caractérisé en ce que** l'étape d'estimation de l'état de vieillissement de la batterie comprend la détermination d'un nombre de charges complètes réalisées de la batterie.

5. Procédé selon l'une quelconque des revendications précédentes, **caractérisé en ce que** l'étape d'estimation de l'état de vieillissement de la batterie comprend la détermination de la somme des quantités d'énergie déchargées depuis la batterie fonctionnant selon le premier mode de fonctionnement et/ou le second mode de fonctionnement depuis la mise en service de la batterie.

6. Procédé selon l'une quelconque des revendications précédentes, **caractérisé en ce que** les valeurs maximales et minimales d'état de charge prédéterminées pour le premier mode de fonctionnement de la batterie sont déterminées en fonction d'une cartographie reliant l'état de vieillissement de la batterie estimé à chacune de ces valeurs.

7. Dispositif de gestion de l'état de charge d'une batterie de traction d'un groupe moto-propulseur hybride d'un véhicule hybride rechargeable comprenant un moteur thermique et un moteur/générateur électrique destinés à assurer simultanément ou indépendamment la propulsion, ledit dispositif comprenant des moyens de contrôle de la batterie adaptés pour commander la batterie selon un premier mode de fonctionnement sur une plage d'état de charge (CD_Mode) d'amplitude bornée entre des valeurs maximale (BSOC Max_CD) et minimale (BSOC_Min_CD) d'état de charge prédéterminées, dans lequel la batterie fournit l'intégralité de la puissance nécessaire à la propulsion et selon un second mode de fonctionnement dans lequel l'état de charge de la batterie est constamment maintenu sensiblement autour d'une valeur d'état de charge d'équilibre, les moyens de contrôle étant adaptés pour recevoir une estimation d'un état de vieillissement de la batterie et pour commander une diminution de l'amplitude de la plage d'état de charge liée au premier mode de fonctionnement lorsque l'état de vieillissement de la batterie devient supérieur à un seuil d'état de vieillissement donné, **caractérisé en ce que** l'amplitude de la plage d'état de charge (CD_Mode) liée au premier mode de fonctionnement est diminuée progressivement en fonction de l'état de vieillissement jusqu'à une amplitude nulle, ceci en faisant converger l'une vers l'autre ladite valeur maximale (BSOC_Max_CD) et ladite valeur minimale (BSOC_Min_CD) d'état de charge prédéterminées, de sorte que la batterie fonctionne exclusivement selon le second mode de fonctionnement lorsque l'amplitude nulle de la plage d'état de charge liée au premier mode de fonctionnement est atteinte.

8. Véhicule automobile hybride rechargeable comprenant une batterie de traction et un dispositif de gestion de l'état de charge de la batterie selon la revendication 7.

## Patentansprüche

1. Verfahren zur Verwaltung des Ladezustands einer Traktionsbatterie eines wiederaufladbaren Hybridfahrzeugs, das einen hybriden Antriebsstrang des Typs enthält, der einen Verbrennungsmotor und einen elektrischen Motor/Generator enthält, die dazu bestimmt sind, den Antrieb gleichzeitig oder unabhängig zu gewährleisten, wobei die Batterie fähig ist, gemäß einem ersten Betriebsmodus in einem Ladezustandsbereich (CD_Mode) einer zwischen vorbestimmten maximalen (BSOC_Max_CD) und minimalen Ladezustandswerten (BSOC_Min_CD) begrenzten Amplitude, in dem die Batterie die Gesamtheit der für den Antrieb notwendigen Leistung liefert, und einem zweiten Betriebsmodus zu arbeiten, in dem der Ladezustand der Batterie konstant im Wesentlichen um einen Gleichgewicht-Ladezustandswert herum gehalten wird, wobei das Verfahren Schritte enthält:
- der Schätzung eines Alterungszustands der Batterie,
- des Vergleichs des geschätzten Alterungszustands der Batterie bezüglich einer gegebenen Alterungszustandsschwelle, und
- der Verringerung der mit dem ersten Betriebsmodus verbundenen Amplitude des Ladezustandsbereichs (CD_Mode), wenn der Alterungszustand der Batterie größer wird als die gegebene Alterungszustandsschwelle,
wobei das Verfahren **dadurch gekennzeichnet ist, dass** die mit dem ersten Betriebsmodus verbundene Amplitude des Ladezustandsbereichs (CD _Mode) abhängig vom Alterungszustand progressiv bis auf eine Null-Amplitude verringert wird, indem die vorbestimmten maximalen (BSOC_Max_CD) und minimalen Ladezustandswerte (BSOC_Min_CD) zueinander konvergiert werden, so dass die Batterie ausschließlich gemäß dem zweiten Betriebsmodus arbeitet, wenn die mit dem ersten Betriebsmodus verbundene Null-Amplitude des Ladezustandsbereichs erreicht ist.

2. Verfahren nach Anspruch 1, **dadurch gekennzeichnet, dass** der Schritt der Schätzung des Alterungszustands der Batterie die Bestimmung des Energie-Gesundheitszustands der Batterie enthält.

3. Verfahren nach einem der vorhergehenden Ansprüche, **dadurch gekennzeichnet, dass** der Schritt der Schätzung des Alterungszustands der Batterie die Bestimmung der seit der Inbetriebnahme der Batterie vergangenen Zeit enthält.

4. Verfahren nach einem der vorhergehenden Ansprüche, **dadurch gekennzeichnet, dass** der Schritt der Schätzung des Alterungszustands der Batterie die Bestimmung einer Anzahl von durchgeführten vollständigen Ladungen der Batterie enthält.

5. Verfahren nach einem der vorhergehenden Ansprüche, **dadurch gekennzeichnet, dass** der Schritt der Schätzung des Alterungszustands der Batterie die Bestimmung der Summe der von der gemäß dem ersten Betriebsmodus und/oder dem zweiten Betriebsmodus arbeitenden Batterie seit der Inbetriebnahme der Batterie entladenen Energiemengen enthält.

6. Verfahren nach einem der vorhergehenden Ansprüche, **dadurch gekennzeichnet, dass** die vorbestimmten maximalen und minimalen Ladezustandswerte für den ersten Betriebsmodus der Batterie abhängig von einem Kennfelds bestimmt werden, das den geschätzten Alterungszustand der Batterie mit jedem dieser Werte verbindet.

7. Vorrichtung zur Verwaltung des Ladezustands einer Traktionsbatterie eines hybriden Antriebsstrangs eines wiederaufladbaren Hybridfahrzeugs, das einen Verbrennungsmotor und einen elektrischen Motor/Generator enthält, die dazu bestimmt sind, den Antrieb gleichzeitig oder unabhängig zu gewährleisten, wobei die Vorrichtung Kontrolleinrichtungen der Batterie enthält, die geeignet sind, die Batterie gemäß einem ersten Betriebsmodus in einem Ladezustandsbereich (CD _Mode) einer zwischen vorbestimmten maximalen (BSOC _Max_CD) und minimalen Ladezustandswerten (BSOC _Min_CD) begrenzten Amplitude, in dem die Batterie die Gesamtheit der für den Antrieb notwendigen Leistung liefert, und gemäß einem zweiten Betriebsmodus zu steuern, in dem der Ladezustand der Batterie konstant im Wesentlichen um einen Gleichgewicht-Ladezustandswert herum gehalten wird, wobei die Kontrolleinrichtungen geeignet sind, eine Schätzung eines Alterungszustands der Batterie zu empfangen und eine Verringerung der mit dem ersten Betriebsmodus verbundenen Amplitude des Ladezustandsbereichs (CD_Mode) zu steuern, wenn der Alterungszustand der Batterie größer wird als eine gegebene Alterungszustandsschwelle, **dadurch gekennzeichnet, dass** die mit dem ersten Betriebsmodus verbundene Amplitude des Ladezustandsbereichs (CD_Mode) abhängig vom Alterungszustand progressiv bis auf eine Null-Amplitude verringert wird, indem die vorbestimmten maximalen (BSOC_Max_CD) und minimalen Ladezustandswerte (BSOC_Min_CD) zueinander konvergiert werden, so dass die Batterie ausschließlich gemäß dem zweiten Betriebsmodus arbeitet, wenn die mit dem ersten Betriebsmodus verbundene Null-Amplitude des Ladezustandsbereichs erreicht ist.

8. Wiederaufladbares Hybridkraftfahrzeug, das eine Traktionsbatterie und eine Verwaltungsvorrichtung des Ladezustands der Batterie nach Anspruch 7 enthält.

## Claims

1. Method for managing the state of charge of a traction battery of a rechargeable hybrid vehicle, comprising a hybrid power train of the type comprising a combustion engine and an electric motor/generator intended simultaneously or independently to provide propulsion, said battery being capable of operating in a first operating mode over a state-of-charge range (CD_Mode), the amplitude of which is bounded by a predetermined maximum state-of-charge value (BSOC_Max_CD) and a predetermined minimum state-of-charge value (BSOC_Min_CD), in which the battery supplies all of the power necessary for propulsion, and a second operating mode, in which the state of charge of the battery is constantly kept substantially around an equilibrium state-of-charge value, said method comprising steps of:
- estimating a state of ageing of the battery,
- comparing the estimated state of ageing of the battery in relation to a given state-of-ageing threshold, and
- reducing the amplitude of the state-of-charge range (CD_Mode) linked to the first operating mode when the state of ageing of the battery rises above the given state-of-ageing threshold,
the method being **characterized in that** the amplitude of the state-of-charge range (CD_Mode) linked to the first operating mode is reduced progressively, depending on the state of ageing, down to a zero amplitude, by making said predetermined maximum state-of-charge value (BSOC _Max_CD) and said predetermined minimum state-of-charge value (BSOC_Min_CD) converge towards one another, so that the battery operates exclusively in the second operating mode when the zero amplitude of the state-of-charge range linked to the first operating mode is reached.

2. Method according to Claim 1, **characterized in that** the step of estimating the state of ageing of the battery comprises determining the state of health of the battery in energy terms.

3. Method according to either one of the preceding claims, **characterized in that** the step of estimating the state of ageing of the battery comprises determining the time elapsed since the battery was brought into service.

4. Method according to any one of the preceding claims, **characterized in that** the step of estimating the state of ageing of the battery comprises determining a number of times the battery has been fully charged.

5. Method according to any one of the preceding claims, **characterized in that** the step of estimating the state of ageing of the battery comprises determining the sum of the quantities of energy which are discharged from the battery, operating in the first operating mode and/or the second operating mode, since the battery was brought into service.

6. Method according to any one of the preceding claims, **characterized in that** the predetermined maximum and minimum state-of-charge values for the first operating mode of the battery are determined depending on a mapping linking the estimated state of ageing of the battery to each of these values.

7. Device for managing the state of charge of a traction battery of a hybrid power train of a rechargeable hybrid vehicle, comprising a combustion engine and an electric motor/generator intended simultaneously or independently to provide propulsion, said device comprising means for controlling the battery, designed to control the battery in a first operating mode over a state-of-charge range (CD_Mode), the amplitude of which is bounded by a predetermined maximum state-of-charge value (BSOC _Max_CD) and a predetermined minimum state-of-charge value (BSOC_Min_CD), in which the battery supplies all of the power necessary for propulsion, and in a second operating mode, in which the state of charge of the battery is constantly kept substantially around an equilibrium state-of-charge value, the control means being designed to receive an estimate of a state of ageing of the battery, and to control a reduction of the amplitude of the state-of-charge range linked to the first operating mode when the state of ageing of the battery rises above a given state-of-ageing threshold, **characterized in that** the amplitude of the state-of-charge range (CD _Mode) linked to the first operating mode is reduced progressively, depending on the state of ageing, down to a zero amplitude, by making said predetermined maximum state-of-charge value (BSOC _Max_CD) and said predetermined minimum state-of-charge value (BSOC_Min_CD) converge towards one another, so that the battery operates exclusively in the second operating mode when the zero amplitude of the state-of-charge range linked to the first operating mode is reached.

8. Rechargeable hybrid motor vehicle comprising a traction battery and a device for managing the state of charge of the battery according to Claim 7.
